# EUROPEAN PATENT SPECIFICATION

(11) **EP 2 312 791 B1**
(45) Date of publication and mention of the grant of the patent: **01.11.2017**
(21) Application number: 11152312.2
(22) Date of filing: 28.01.2000
(51) Int. Cl.: H04L 12/22, H04L 29/06

(54) **KEY MANAGEMENT FOR TELEPHONE CALLS TO PROTECT SIGNALING AND CALL PACKETS BETWEEN CTA'S**
SCHLÜSSELVERWALTUNG FÜR TELEFONANRUFE ZUM SCHUTZ VON SIGNALISIERUNGS- UND ANRUFSPAKETEN ZWISCHEN CTA'S
GESTION DE CLÉS D'APPELS TÉLÉPHONIQUES POUR PROTÉGER LES PAQUETS D'APPELS ET DE SIGNALISATION ENTRE DES CTA

(30) Priority: 29.01.1999 US 117788 P; 09.04.1999 US 128772 P
(43) Date of publication of application: 20.04.2011
(62) Divisional of application: 00913279.6
(73) Proprietor: Google Technology Holdings LLC, Mountain View, CA 94043 (US)
(72) Inventor: Medvinsky, Sasha, San Diego, CA 92129 (US); Anderson, Steven, E., San Diego, CA 92037 (US); Moroney, Paul, La Jolla, CA 92037 (US); Sprunk, Eric, Carlsbad, CA 92009 (US); Fellows, Jonathan, A., Del Mar, CA 92014 (US)
(74) Representative: Betten & Resch

(56) References cited:
- EP-A- 0 400 362
- WO-A-98/59467
- US-A- 5 557 678
- "Security and encryption for H-series (H.323 and other H.245-based) multimedia terminals; H.235 (02/98)", ITU-T STANDARD, INTERNATIONAL TELECOMMUNICATION UNION, GENEVA, CH, 1 February 1998 (1998-02-01), XP017401338,

## Description

### FIELD OF THE INVENTION

This invention relates to the field of communication in telephony networks, and more particularly, to the establishment of a secure communication channel between users in an IP telephony network.

### BACKGROUND OF THE INVENTION

Internet Protocol (IP) telephony networks allow large numbers of users to communicate with each other over secure channels. Typically, a user is coupled to the IP telephony network via a telephony adapter (TA). In a cable IP networks, a cable telephony adapter (CTA) may be used. The CTA converts user information, such as voice or data, into packets for transmission on the network, and converts received packets into digital or analog signals for use by the user.

To implement a secure channel between two users in the IP telephony network, their associated CTAs use the same encryption techniques and keys. However, this presents a problem since for CTA to CTA communications, there is a very large number (millions) of possible connections that may be established. Thus, any single CTA cannot possibly maintain security associations for all possible connections ahead of time. Therefore a security association (e.g. encryption key) must be established on the fly-when the secure channel (phone call) is first set up.

Standard techniques to establish CTA to CTA communications provide secure key exchanges (authenticated and confidential), and use one of two techniques. In the first technique, a known key is shared between the two parties. As stated above, this technique does not scale to millions of users and is therefore not applicable for general IP telephony networks. The second technique, uses a public key technique, such as Diffie-Hellman exchanges in combination with digital signatures. Such techniques are costly in terms of time and CPU consumption and may cause a noticeable delay in call setup or increase the cost of the CTA device. Thus, public key techniques are not desirable for this purpose. An exemplary method of establishing communications over IP telephony networks is found in the International patent application WO-98/59467-A.

The European patent application EP-0400362-A discloses a method for establishing encrypted communications over a telephony network, wherein the telephone exchange associated to the originating party generates and distributes a session key that is then used by the originating and terminating parties to encrypt the communication.

The ITU-T standard H.235 (02/98) "Security and encryption for H-series (H.323 and other H.245-based) multimedia terminals" discloses methods for establishing a secure communication over IP telephony networks, wherein one of the endpoints is responsible for generating an encryption key.

### SUMMARY OF THE INVENTION

The present invention provides a system for establishing secure communication between users in an IP telephony network, as defined in claim 5. In IP telephony networks, gateway controllers are used to control messaging between the users and the IP telephony network infrastructure.

The system included in the present invention provides a gateway controller that creates a media stream encryption key that is used to encrypt and decrypt messages between users. When a first user attempts to establish a secure channel with a second user, the gateway controller (source) associated with the first user, creates the media stream encryption key, sends the key inside a signaling message to the gateway controller (destination) that services the second user. The two gateway controllers then send the key to the two CTAs, that service the first and second users. This allows the two CTAs, and thus, the two users to quickly establish a secure communication channel in the IP telephony network.

In an embodiment of the present invention a method for establishing a secure communication channel between a first user and a second user in an IP telephony network is provided, according to claim 8. The first user and the second user are coupled to first and second telephony adapters, which in turn, are coupled to first and second gateway controllers, respectively, wherein the gateway controllers control user access to the IP telephony network. The telephony adapters are used to encrypt and decrypt user information exchanged over the IP telephony network. The method begins by receiving a request at the first gateway controller to establish a secure communication channel between the first user and the second user. Next, a secret key is generated at the first gateway controller. A copy of the secret key is distributed to the first and second telephony adapters over previously established secure connections. Finally, the secure communication channel is established between the first user and the second user by encrypting and decrypting information using the secret key.

The present invention provides a gateway controller for establishing secure communications in an IP telephony network according to claim 1. A further understanding of the nature and the advantages of the inventions disclosed herein may be realized by reference to the remaining portions of the specification and the attached drawings.

### BRIEF DESCRIPTION OF THE DRAWINGS

FIG. 1 shows a portion of an IP telephony network constructed in accordance with the present invention;
FIG. 2 shows a gateway controller constructed in accordance with the present invention.
FIG. 3 shows a message flow diagram illustrating message flow in the IP telephony network of FIG. 1 in accordance with the present invention;
FIG. 4 shows a method for establishing a secure communication channel between users in the IP telephony network of FIG. 1 using the messages shown in FIG. 3; and
FIG. 5 shows the IP telephony network of FIG. 1 and includes a connection to a plain old telephone system (POTS) gateway.

### DESCRIPTION OF THE SPECIFIC EMBODIMENTS

The present invention includes a system for establishing a secure communication channel between users of an IP telephony network. Embodiments of the present invention utilize key-based encryption techniques as a mechanism for achieving secure communication in the IP telephony network. Such embodiments are not limited to using any one encryption technique, and therefore, it is possible to construct embodiments of the present invention using several types of encryption techniques. Since the type of encryption technique selected is not essential to the embodiments of the present invention, a detailed description of a specific encryption technique is not provided.

For purposes of clarity and convenience, it will be assumed that the IP telephony network is a cable network, and so, cable telephony adapters (CTA) will be used in the various embodiments. However, the invention is not limited to using CTAs, and may in fact be implemented using any other type of telephony adapters as required by a particular network.

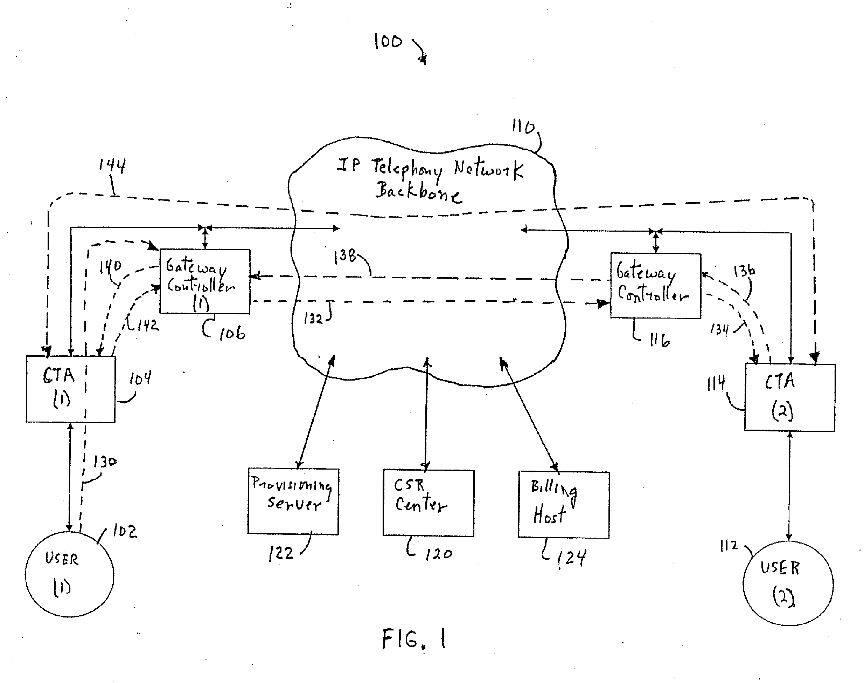

FIG. 1 shows a portion of an IP telephony network 100 constructed in accordance with the present invention. The network 100 includes a first user 102 coupled to a source CTA 104. The source CTA 104 is further coupled to a source gateway controller 106 and an IP telephony network backbone 110.

The network 100 also includes a second user 112 coupled to a destination CTA 114. The destination CTA 114 is further coupled to a destination gateway controller 116 and the IP telephony network backbone 110. In addition, the network 100 also includes a customer service representative (CSR) center 120, a provisioning server 122 and a billing host 124.

Each user of the network 100 goes through an initialization process to activate network service. For example, when the user 102 and associated CTA 104 are coupled to the network, a series of messages are exchanged between the CTA 104, the gateway controller 106 and the CSR 120. The messages provide for activation of telephony service for the user 102, establishment of account information and creation of encryption keys to be used by the CTA to encrypt and decrypt messages exchanged over the network. The billing host 124 is used to setup account information for each user and to bill for network usage. The provisioning server 122 is used to initialize and register CTA devices within a specific IP telephony network.

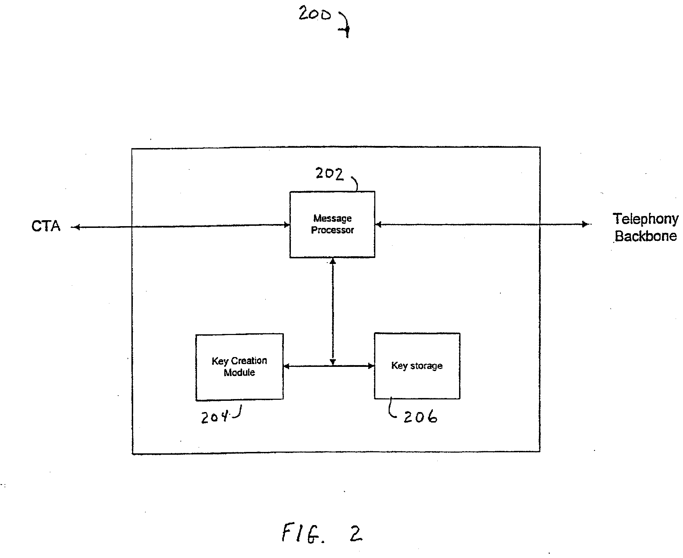

FIG. 2 shows one embodiment of a gateway controller 200 constructed in accordance with the present invention. The gateway controller 200 includes a message processor 202, a key creation module 204 and a key storage 206. The gateway controller 200 is coupled between the IP telephony backbone and a network adapter, such as a CTA device. For example, the gateway controller 200 is suitable for use as the gateway controller 106 in FIG. 1.

The message processor 202 processes messages that are exchanged between the CTA and other components of the telephony network. For example, when messages are exchanged between the CTA and other components of the network during an initial CTA registration process.

The key creation module 204, has logic to create or derive keys that may be used to encrypt or decrypt messages exchanged between CTAs over the IP telephony backbone 110. The keys may be stored in the key storage 206. The key storage has logic to encrypt the keys before storage using a public/private key pair. For example, the public/private key pair may be provided by the network 100 infrastructure or from government law enforcement officials.

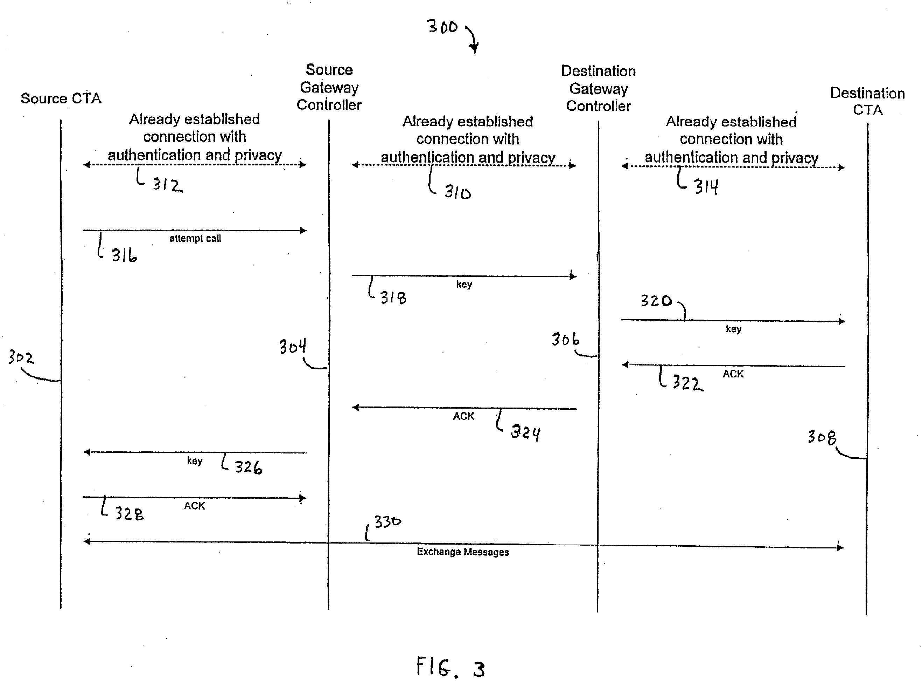

FIG. 3 shows a message exchange diagram 300 illustrating how messages are exchanged between the components of the network 100 to establish a secure communication channel between the user 102 and the user 112. The messages are transmitted or received at the source CTA represented at line 302, the source gateway controller 106 represented at line 304, the destination gateway controller 116 represented at line 306, and the destination CTA 114 represented at line 308.

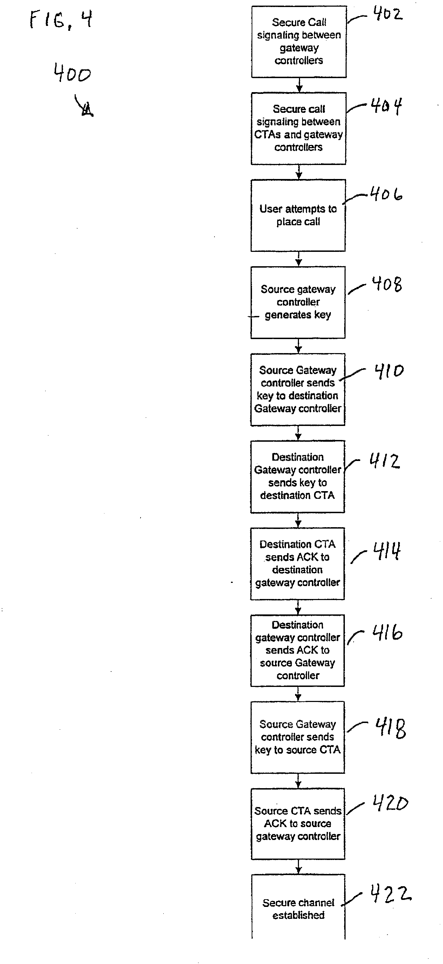

FIG. 4 shows a flow diagram 400 illustrating the process of establishing a secure communication channel utilizing the messages shown in FIG. 3 in accordance with the present invention.

At block 402, secure call signaling between the source and destination gateway controllers is established as shown by message 310. At block 404, secure call signaling between source and destination CTAs and their associated gateway controller is established as shown by messages 312 and 314.

At block 406, the user 102 desires to place a secure call to the user 112 and so notifies the CTA 104 which in turn notifies the gateway controller 106, as shown by message 316 and at path 130. At block 408, the source gateway controller creates a key to be used to establish the secure communication channel requested by the user 102. In one embodiment, the key is a random number and may be generated, for example, at the key creation module 204.

At block 410, the key is transmitted from the source gateway controller to the destination gateway controller, as shown by message 318 and at path 132. At block 412, the destination gateway controller forwards the key to the destination CTA as shown by message 320 and at path 134. At block 414, the destination CTA sends an acknowledgment to the destination gateway controller indicating that the key has been received, as shown by message 322 at path 136.

At block 416, the destination gateway controller sends an acknowledgment to the source gateway controller indicating that the key has been received, as shown by message 324 at path 138. At block 418, the source gateway controller transmits the key to the source CTA, as shown by message 326 at path 140. At block 420, the source CTA responds by transmitting an acknowledgment as shown by message 328 at path 142.

At block 422, a secure channel between the source CTA and the destination CTA can now be established where encrypted messages can be exchanged between the telephony users 102 and 112, as shown by message 330 at path 144.

As a result of the above described operations, the source gateway controller creates an encryption key and distributes it to the source and destination CTAs to quickly set up a secure communication channel thereby allowing the user 102 and the user 112 to communicate over the IP telephony network 100. In one embodiment the messages distributing the key are additional messages used to operate the network 100. In another embodiment, the key may be incorporated into existing call signaling messages so as to keep of the overall message overhead low and improve network efficiency.

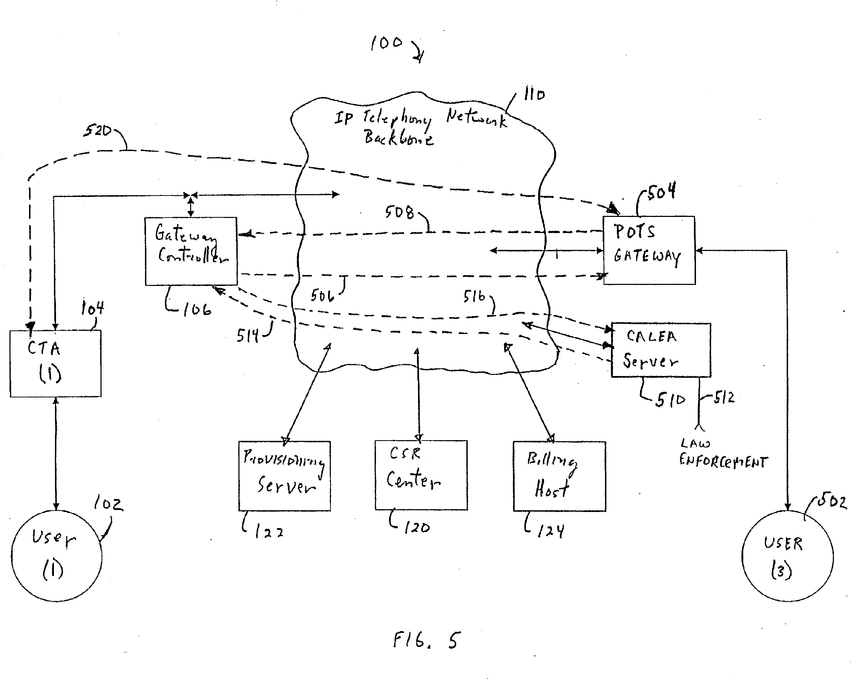

FIG. 5 shows the IP telephony network 100 of FIG. 1 and includes a connection to a plain old telephone system (POTS) gateway 504. The POTS gateway 504 is coupled to a third user 502 of the network 100.

To establish a secure communication channel between the user 102 and the user 502, the method of FIG. 4 can be used, however, since there is no destination CTA, operations relating to the destination CTA are not used. For example, the POTS gateway can provide a private and authenticated connection. Thus, the following describes the differences in the call setup process when using the POTS gateway.

At block 410, the source gateway controller sends the key to the POTS gateway 504, as shown by path 506. The blocks 412 and 414 are skipped. At block 416, the POTS gateway sends an acknowledge signal to the source gateway controller as shown by path 508. Blocks 418 through 422 remain the same.

Using the above modifications to the method of FIG. 4, a private and authenticated secure channel can be established between the CTA 104 and the POTS gateway 504, as shown at path 520, so that the users 102 and 504 may exchange messages.

In another embodiment of the present invention, where the call origination is reversed, the encryption key can be requested from the destination gateway. For example, the user 502 requests to make a call to user 102. The POTS gateway 504 requests the encryption key from the gateway controller 106, which services the user 102. The gateway controller 106 then creates the encryption key and provides it to the POTS gateway to allow a secure communication channel to be created between the POTS gateway and the CTA 104.

In another embodiment of the present invention, the encryption key can be created at the source gateway controller by deriving it from a secret already shared between the source gateway controller and the source CTA. Thus, both the source gateway controller and the source CTA can derived the key from the shared secret. In this embodiment, it is not necessary for the source gateway controller to transmit the key to the source CTA after it has been distributed to the destination CTA. This results in fewer messages being exchanged to setup the secure channel between the users.

In another embodiment of the present invention, the key created at the source gateway controller can be shared with law enforcement. The Communications Assistance for Law Enforcement Act (CALEA) requires that phone systems allow the government access to conversations flowing within their networks for wire-tapping purposes. To facilitate this, a CALEA server 510 may be included in the network 100 as shown in FIG. 5. The CALEA server can be accessed by law enforcement, either directly, as shown by 512, or from some other location within the network 100.

The source gateway controller may operate in several ways to comply with the CALEA requirements. In a first method of operation, the source gateway controller receives a request 514 from the CALEA server to forward any key created for use with a particular user. For example, when the user 102 requests to make a call and a key is created, the key is transmitted to the CALEA server, as shown at 516. In a second method of operation, the source gateway controller receives a request 514 to forward any key currently being used by a particular user. For example, if the user 102 already has a call established using a particular key, that key is transmitted to the CALEA server, as shown at 516. In a third method of operation, the source gateway controller receives a request 514 to forward any key previously used by a particular user. For example, if the user 102 had previously made a call using a particular key, that key is stored in the key storage 206 of the gateway controller. The key is retrieved from the key storage and transmitted to the CALEA server as shown at 516.

In one embodiment, the keys are encrypted prior to storage. The encryption is done using a public/private key pair belonging to law enforcement. Thus, upon retrieval, any keys so encrypted can only be decrypted by law enforcement officials with knowledge of the private key.

Once the key is at the CALEA server, messages are redirected by the network to the server so that they may be decoded using the key and monitored by law enforcement officials. Thus, embodiments of the gateway controller of the present invention includes support for the CALEA requirements.

The present invention provides a method, a system and a gateway controller for establishing a secure communication channel between two users in an IP telephony network. It will be apparent to those with skill in the art that modifications to the above methods and embodiments can occur without deviating from the scope of the present invention. Accordingly, the disclosures and descriptions herein are intended to be illustrative, but not limiting, of the scope of the invention which is set forth in the following claims.

## Claims

1. A gateway controller (200) for establishing a secure communication channel (144) in an IP telephony network, the gateway controller coupled between a telephony adapter (104) and a telephony network backbone, the gateway controller comprising:
a key creation module (204) having logic to create a secret key;
a key storage module (206) coupled to the key creation module and having logic to store the secret key; and
a message processor (202) coupled to the key creation module and the key storage module, and having logic to establish secure signalling connections with the telephony adapter and with the telephony network backbone and to process messages exchanged between the telephony adapter and the telephony network backbone, wherein the message processor further comprises:
logic to receive a request to establish a secure communication channel (144) between a first user (102) and a second user (112), the first user coupled to the telephony adapter (104), the second user coupled to a second telephony adapter (114);
logic to distribute the secret key (410, 418) to the telephony adapters over the previously established secure signalling connections, whereby the secure communication channel (144) between the first user and the second user may be established (422) by the telephony adapter (104) and the second telephony adapter (114) encrypting and decrypting information using the secret key.

2. The gateway controller of claim 1 wherein the key creation module has logic to generate a random number as the secret key.

3. The gateway controller of claim 1 wherein the key creation module has logic to derive the secret key from a signaling key shared with the telephony adapter.

4. The gateway controller of claim 1 wherein the key storage module has logic to encrypt the secret key before storage, using a public/private key pair belonging to law enforcement.

5. A system for providing encrypted communications in an IP telephony network, said system comprising:
a first cable telephony adapter (104);
a first gateway controller (106) coupled with said first cable telephony adapter (104);
a second cable telephony adapter (114);
a second gateway controller (116) coupled with said second cable telephony adapter;
a network (100) coupled with both said first gateway controller (106) and said second gateway controller (116) so as to facilitate communications between said first cable telephony adapter and said second cable telephony adapter wherein said first gateway control (106) comprises:
a first key creation module (204) configured to generate a secret key and distributing the secret key to both said first cable telephony adapter (104) and said second cable adapter (114) for use in encrypted communications between said first cable telephony adapter and said second cable telephony adapter;
wherein said first gateway (106), said second gateway (116), said first cable telephony adapter (104), and said second cable telephony adapter (114) are adapted to exchange signalling messages over secure signalling connections wherein said signalling messages contain the secret key for establishing a secure communications channel (144) directly between said first cable telephony adapter (104) and said second cable telephony adapter (114); and
said first cable telephony adapter (104) and said second cable telephony adapter (114) are adapted to exchange encrypted communications via the established secure communications channel (144).

6. The system as described in claim 5, wherein said second gateway controller comprises;
a second key creation module configured to generate a secret key for distribution to both said first cable telephony adapter and said second cable telephony adapter for use in encrypted communications between said first cable telephony adapter and said second cable telephony adapter.

7. The system as described in claim 5, wherein said first gateway controller further comprises:
a message processor configured to receive a signalling message from said first cable telephony adapter intended for said second cable telephony adapter and further configured to forward said signaling message to said second gateway controller.

8. A method of establishing, in an IP telephony network, secure communications between a first cable telephony adapter and a second cable telephony, wherein said first cable telephony adapter is coupled with a first gateway controller, said second cable telephony adapter is coupled with a second gateway controller, and a network is coupled with said first gateway controller and said second gateway controller, said method comprising:
receiving at said first gateway controller a request from said first cable telephony adapter to establish communications between said first cable telephony adapter and said second cable telephony adapter;
generating a secret key at said first gateway controller (408);
distributing said secret key to said second gateway controller (318, 410);
distributing said secret key from said second gateway controller to said second cable telephony adapter (320, 412);
distributing said secret key from said first gateway controller to said first cable telephony adapter (326, 418); wherein said secret key is distributed to said second gateway controller, said first cable telephony adapter and said second cable telephony adapter via previously established secure signalling connections (312, 310, 314).

9. The method as described in claim 8, and further comprising:
encrypting a message at said first cable telephony adapter with said secret key;
sending said encrypted message to said second cable telephony adapter via a secure channel between said first cable telephony adapter and said second cable telephony adapter.

10. The method as described in claim 8, and further comprising:
receiving said encrypted message at said second cable telephony adapter;
decrypting said encrypted message at said second cable telephony adapter with said secret key.

## Patentansprüche

1. Gateway-Steuereinheit (200) zum Aufbauen eines sicheren Kommunikationskanals (144) in einem IP-Telefonienetz, wobei die Gateway-Steuereinheit zwischen einem Telefonieadapter (104) und einem IP-Telefonienetz-Backbone gekoppelt ist, wobei die Gateway-Steuereinheit umfasst:
ein Schlüsselerzeugungsmodul (204), das eine Logik aufweist, um einen geheimen Schlüssel zu erzeugen;
ein Schlüsselspeichermodul (206), das mit dem Schlüsselerzeugungsmodul gekoppelt ist und eine Logik aufweist, um den geheimen Schlüssel zu speichern; und
einen Nachrichtenprozessor (202), der mit dem Schlüsselerzeugungsmodul und dem Schlüsselspeichermodul gekoppelt ist und eine Logik aufweist, um sichere Signalisierungsverbindungen mit dem Telefonieadapter und mit dem Telefonienetz-Backbone aufzubauen und Nachrichten zu verarbeiten, die zwischen dem Telefonieadapter und dem Telefonienetz-Backbone austauscht werden, wobei der Nachrichtenprozessor ferner umfasst:
eine Logik, um eine Anforderung, einen sicheren Kommunikationskanal (144) zwischen einem ersten Anwender (102) und einem zweiten Anwender (112) aufzubauen, zu empfangen, wobei der erste Anwender mit dem Telefonieadapter (104) gekoppelt ist und der zweite Anwender mit einem zweiten Telefonieadapter (114) gekoppelt ist;
eine Logik, um den geheimen Schlüssel (410, 418) zu den Telefonieadaptem über die vorher aufgebauten sicheren Signalisierungsverbindungen zu verteilen, wodurch der sichere Kommunikationskanal (144) zwischen dem ersten Anwender und dem zweiten Anwender durch den Telefonieadapter (104) und den zweiten Telefonieadapter (114), die Informationen unter Verwendung des geheimen Schlüssels verschlüsseln und entschlüsseln, aufgebaut werden kann.

2. Gateway-Steuereinheit nach Anspruch 1, wobei das Schlüsselerzeugungsmodul eine Logik aufweist, um eine Zufallszahl als den geheimen Schlüssel zu erzeugen.

3. Gateway-Steuereinheit nach Anspruch 1, wobei das Schlüsselerzeugungsmodul eine Logik aufweist, um den geheimen Schlüssel aus einem Signalisierungsschlüssel, der gemeinsam mit dem Telefonieadapter verwendet wird, abzuleiten.

4. Gateway-Steuereinheit nach Anspruch 1, wobei das Schlüsselspeichermodul eine Logik aufweist, um den geheimen Schlüssel vor dem Speichern unter Verwendung eines öffentlichen/privaten Schlüsselpaars, das zur Durchsetzung von Rechtsvorschriften gehört, zu verschlüsseln.

5. System zum Bereitstellen verschlüsselter Kommunikation in einem IP-Telefonienetz, wobei das System umfasst:
einen ersten Kabeltelefonieadapter (104);
eine erste Gateway-Steuereinheit (106), die mit dem ersten Kabeltelefonieadapter (104) gekoppelt ist;
einen zweiten Kabeltelefonieadapter (114);
eine zweite Gateway-Steuereinheit (116), die mit dem zweiten Kabeltelefonieadapter gekoppelt ist;
ein Netz (100), das sowohl mit der ersten Gateway-Steuereinheit (106) als auch mit der zweiten Gateway-Steuereinheit (116) gekoppelt ist, um eine Kommunikation zwischen dem ersten Kabeltelefonieadapter und dem zweiten Kabeltelefonieadapter zu unterstützen,
wobei die erste Gateway-Steuerung (106) umfasst:
ein erstes Schlüsselerzeugungsmodul (204), das konfiguriert ist, einen geheimen Schlüssel zu erzeugen und den geheimen Schlüssel sowohl zu dem ersten Kabeltelefonieadapter (104) als auch zu dem zweiten Kabeladapter (114) zum Gebrauch zur verschlüsselten Kommunikation zwischen dem ersten Kabeltelefonieadapter und dem zweiten Kabeltelefonieadapter zu verteilen;
wobei das erste Gateway (106), das zweite Gateway (116), der erste Kabeltelefonieadapter (104) und der zweite Kabeltelefonieadapter (114) ausgelegt sind, Signalisierungsnachrichten über sichere Signalisierungsverbindungen auszutauschen, wobei die Signalisierungsnachrichten den geheimen Schlüssel zum direkten Aufbauen eines sicheren Kommunikationskanals (144) zwischen dem ersten Kabeltelefonieadapter (104) und dem zweiten Kabeltelefonieadapter (114) beinhalten; und
der erste Kabeltelefonieadapter (104) und der zweiten Kabeltelefonieadapter (114) ausgelegt sind, eine verschlüsselte Kommunikation über den aufgebauten sicheren Kommunikationskanal (144) auszutauschen.

6. System nach Anspruch 5, wobei die zweite Gateway-Steuereinheit umfasst:
ein zweites Schlüsselerzeugungsmodul, das konfiguriert ist, einen geheimen Schlüssel zur Verteilung sowohl zu dem ersten Kabeltelefonieadapter als auch zu dem zweiten Kabeltelefonieadapter zum Gebrauch zur verschlüsselten Kommunikation zwischen dem ersten Kabeltelefonieadapter und dem zweiten Kabeltelefonieadapter zu erzeugen.

7. System nach Anspruch 5, wobei die erste Gateway-Steuereinheit ferner umfasst:
einen Nachrichtenprozessor, der konfiguriert ist, eine Signalisierungsnachricht von dem ersten Kabeltelefonieadapter, die für den zweiten Kabeltelefonieadapter vorgesehen ist, zu empfangen, und ferner konfiguriert ist, die Signalisierungsnachricht zu der zweiten Gateway-Steuereinheit weiterzuleiten.

8. Verfahren zum Aufbauen in einem IP-Telefonienetz von sicherer Kommunikation zwischen einem ersten Kabeltelefonieadapter und einer zweiten Kabeltelefonie, wobei der erste Kabeltelefonieadapter mit einer ersten Gateway-Steuereinheit gekoppelt ist, der zweiten Kabeltelefonieadapter mit einer zweiten Gateway-Steuereinheit gekoppelt ist und ein Netz mit der ersten Gateway-Steuereinheit und der zweiten Gateway-Steuereinheit gekoppelt ist, wobei das Verfahren umfasst:
Empfangen in der ersten Gateway-Steuereinheit einer Anforderung von dem ersten Kabeltelefonieadapter, eine Kommunikation zwischen dem ersten Kabeltelefonieadapter und dem zweiten Kabeltelefonieadapter aufzubauen;
Erzeugen eines geheimen Schlüssels in der ersten Gateway-Steuereinheit (408);
Verteilen des geheimen Schlüssels zu der zweiten Gateway-Steuereinheit (318, 410);
Verteilen des geheimen Schlüssels von der zweiten Gateway-Steuereinheit zu dem zweiten Kabeltelefonieadapter (320, 412);
Verteilen des geheimen Schlüssels von der ersten Gateway-Steuereinheit zu dem ersten Kabeltelefonieadapter (326, 418);
wobei der geheime Schlüssel zu der zweiten Gateway-Steuereinheit, dem ersten Kabeltelefonieadapter und dem zweiten Kabeltelefonieadapter über vorher aufgebaute sichere Signalisierungsverbindungen (312, 310, 314) verteilt wird.

9. Verfahren nach Anspruch 8, das ferner umfasst:
Verschlüsseln einer Nachricht in dem ersten Kabeltelefonieadapter mit dem geheimen Schlüssel;
Senden der verschlüsselten Nachricht zu dem zweiten Kabeltelefonieadapter über einen sicheren Kanal zwischen dem ersten Kabeltelefonieadapter und dem zweiten Kabeltelefonieadapter.

10. Verfahren nach Anspruch 8, das ferner umfasst:
Empfangen der verschlüsselten Nachricht in dem zweiten Kabeltelefonieadapter;
Entschlüsseln der verschlüsselten Nachricht in dem zweiten Kabeltelefonieadapter mit dem geheimen Schlüssel.

## Revendications

1. Un contrôleur de passerelle (200) pour établir un canal de communication (144) sécurisé dans un réseau de téléphonie IP, le contrôleur de passerelle étant relié entre un adaptateur de téléphonie (104) et un réseau central de téléphonie, le contrôleur de passerelle comprenant :
un module (204) de création de clé ayant une logique pour créer une clé secrète ;
un module (206) de stockage de clé relié au module de création de clé et ayant une logique pour stocker la clé secrète ; et
un processeur de message (202) relié au module de création de clé et au module de stockage de clé, et ayant une logique pour établir des connexions de signalisation sécurisées avec l'adaptateur de téléphonie et avec le réseau central de téléphonie et pour traiter des messages échangés entre l'adaptateur de téléphonie et le réseau de téléphonie, le processeur de message comprenant en outre :
une logique pour recevoir une demande d'établissement d'un canal de communication (144) sécurisé entre un premier utilisateur (102) et un deuxième utilisateur (112), le premier utilisateur étant relié à l'adaptateur de téléphonie (104), le deuxième utilisateur étant relié à un deuxième adaptateur de téléphonie (114) ;
une logique pour distribuer la clé secrète (410, 418) aux adaptateurs de téléphonie sur les connexions de signalisation sécurisées précédemment établies, le canal de communication (144) sécurisé entre le premier utilisateur et le deuxième utilisateur peut être établi (422) par l'adaptateur de téléphonie (104) et le deuxième adaptateur de téléphonie (114), cryptant et décryptant des informations à l'aide de la clé secrète.

2. Contrôleur de passerelle selon la revendication 1, dans lequel le module de création de clé a une logique pour générer un nombre aléatoire en tant que clé secrète.

3. Le contrôleur de passerelle selon la revendication 1, dans lequel le module de création de clé a une logique pour dériver la clé secrète à partir d'une clé de signalisation partagée avec l'adaptateur de téléphonie.

4. Contrôleur de passerelle selon la revendication 1, dans lequel le module de stockage de clé a une logique pour crypter la clé secrète avant le stockage, en utilisant une paire de clés publique / privée appartenant à l'application de la loi.

5. Un système pour fournir des communications cryptées dans un réseau de téléphonie IP, ledit système comprenant :
un premier adaptateur de téléphonie par câble (104) ;
un premier contrôleur de passerelle (106) relié audit premier adaptateur de téléphonie par câble (104) ;
un deuxième adaptateur de téléphonie par câble (114) ;
un deuxième contrôleur de passerelle (116) relié audit deuxième adaptateur de téléphonie par câble ;
un réseau (100) relié à la fois audit premier contrôleur de passerelle (106) et audit deuxième contrôleur de passerelle (116) de manière à faciliter les communications entre ledit premier adaptateur de téléphonie par câble et ledit deuxième adaptateur de téléphonie par câble, dans lequel ladite première commande de passerelle (106) comprend :
un premier module (204) de création de clé configuré pour générer une clé secrète et distribuer la clé secrète à la fois audit premier adaptateur de téléphonie par câble (104) et audit deuxième adaptateur de câble (114)pour une utilisation dans des communications cryptées entre ledit premier adaptateur de téléphonie par câble et ledit deuxième adaptateur de téléphonie par câble ;
ladite première passerelle (106), ladite deuxième passerelle (116), ledit premier adaptateur de téléphonie par câble (104) et ledit deuxième adaptateur de téléphonie par câble (114) étant adaptés pour échanger des messages de signalisation sur des connexions de signalisation sécurisées, lesdits messages de signalisation contenant la clé secrète pour l'établissement d'un canal de communication (144) sécurisé directement entre ledit premier adaptateur de téléphonie par câble (104) et ledit deuxième adaptateur de téléphonie par câble (114) ; et
ledit premier adaptateur de téléphonie par câble (104) et ledit deuxième adaptateur de téléphonie par câble (114) étant adaptés pour échanger des communications cryptées via le canal de communication (144) sécurisé établi.

6. Le système selon la revendication 5, dans lequel ledit deuxième contrôleur de passerelle comprend :
un deuxième module de création de clé configuré pour générer une clé secrète pour distribution à la fois audit premier adaptateur de téléphonie par câble et audit deuxième adaptateur de téléphonie par câble, pour une utilisation dans des communications cryptées entre ledit premier adaptateur de téléphonie par câble et ledit deuxième adaptateur de téléphonie par câble.

7. Le système selon la revendication 5, dans lequel ledit premier contrôleur de passerelle comprend en outre :
un processeur de message configuré pour recevoir un message de signalisation provenant dudit premier adaptateur de téléphonie par câble destiné audit deuxième adaptateur de téléphonie par câble et configuré en outre pour transférer ledit message de signalisation audit deuxième contrôleur de passerelle

8. Un procédé pour établir, dans un réseau de téléphonie IP, des communications sécurisées entre un premier adaptateur de téléphonie par câble et un deuxième adaptateur de téléphonie par câble, dans lequel ledit premier adaptateur de téléphonie par câble est relié à un premier contrôleur de passerelle, ledit deuxième adaptateur de téléphonie par câble est relié à un deuxième contrôleur de passerelle, et un réseau est relié audit premier contrôleur de passerelle et audit deuxième contrôleur de passerelle, ledit procédé comprenant :
le fait de recevoir, au niveau dudit premier contrôleur de passerelle, une requête provenant du premier adaptateur de téléphonie par câble afin d'établir des communications entre ledit premier adaptateur de téléphonie par câble et ledit deuxième adaptateur de téléphonie par câble ;
le fait de générer une clé secrète au niveau dudit premier contrôleur de passerelle (408) ;
le fait de distribuer ladite clé secrète audit deuxième contrôleur de passerelle (318, 410) ;
le fait de distribuer ladite clé secrète depuis ledit deuxième contrôleur de passerelle audit deuxième adaptateur de téléphonie par câble (320, 412) ;
le fait de distribuer ladite clé secrète à partir dudit premier contrôleur de passerelle audit premier adaptateur de téléphonie par câble (326, 418) ;
ladite clé secrète étant distribuée audit deuxième contrôleur de passerelle, audit premier adaptateur de téléphonie par câble et audit deuxième adaptateur de téléphonie par câble au moyen de connexions de signalisation sécurisées (312, 310, 314) établies précédemment.

9. Le procédé selon la revendication 8, et comprenant en outre :
le fait de crypter un message au niveau dudit premier adaptateur de téléphonie par câble au moyen de ladite clé secrète ;
le fait d'envoyer ledit message crypté audit deuxième adaptateur de téléphonie par câble via un canal sécurisé entre ledit premier adaptateur de téléphonie par câble et ledit deuxième adaptateur de téléphonie par câble.

10. Le procédé selon la revendication 8, et comprenant en outre :
le fait de recevoir ledit message crypté au niveau dudit deuxième adaptateur de téléphonie par câble ;
le fait de décrypter ledit message crypté au niveau dudit deuxième adaptateur de téléphonie par câble au moyen de ladite clé secrète.
